# EUROPÄISCHE PATENTSCHRIFT

(11) **EP 3 259 975 B1**
(45) Veröffentlichungstag und Bekanntmachung des Hinweises auf die Patenterteilung: **10.04.2019**
(21) Anmeldenummer: 17157431.2
(22) Anmeldetag: 22.02.2017
(51) Int. Cl.: A01D 43/08, A01B 67/00, A01D 41/127, F02D 29/02

(54) **LANDWIRTSCHAFTLICHE ARBEITSMASCHINE UND VERFAHREN ZUM BETRIEB EINER LANDWIRTSCHAFTLICHEN ARBEITSMASCHINE**
AGRICULTURAL WORK MACHINE AND METHOD FOR OPERATING AN AGRICULTURAL WORK MACHINE
ENGIN AGRICOLE ET PROCÉDÉ DE FONCTIONNEMENT D'UN ENGIN AGRICOLE

(30) Priorität: 24.06.2016 DE 102016111662
(43) Veröffentlichungstag der Anmeldung: 27.12.2017
(73) Patentinhaber: CLAAS Selbstfahrende Erntemaschinen GmbH, 33428 Harsewinkel (DE)
(72) Erfinder: ALTMANN, Claudius, 33617 Bielefeld (DE); HOHM, Robert, 48231 Warendorf (DE); HUGENROTH, Ludger, 33428 Harsewinkel (DE)
(74) Vertreter: CLAAS Gruppe

(56) Entgegenhaltungen:
- EP-A1- 1 818 524
- EP-A1- 2 832 205
- WO-A1-2014/029410
- DE-A1-102008 020 497
- DE-A1-102008 036 378

## Beschreibung

Die vorliegende Erfindung betrifft eine landwirtschaftliche Arbeitsmaschine gemäß dem Oberbegriff von Anspruch 1 und ein Verfahren zum Betrieb einer landwirtschaftlichen Arbeitsmaschine gemäß dem Oberbegriff von Anspruch 10.

Unter einer landwirtschaftlichen Arbeitsmaschine wird jegliche Form von Arbeitsfahrzeug verstanden, das insbesondere mit einem eigenen Fahrantrieb (Antriebsachse mit Antriebsrädern) versehen ist, aber alternativ auch als Fahrzeug ohne eigenen Antrieb, beispielsweise als Hänger, ausgebildet sein kann. Nur beispielhaft erwähnt seien als landwirtschaftliche Arbeitsmaschinen Mähdrescher, Feldhäcksler oder Schlepper mit Anbauten wie Düngerstreuer, Sämaschinen, Spritzeinrichtungen, Wender, Schwader oder dergleichen.

Aus dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Komponente der Arbeitsmaschine verstanden. Neben den vorgenannten Anbauten sind dies unter anderem Vorsatzgeräte der Arbeitsmaschine wie Haspel oder Schneidwerk oder das Fronthubwerk zum Anheben und Absenken von Vorsatzgeräten.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsaggregate und den Fahrantrieb auf. Die von der Verbrennungskraftmaschine abgegebene Leistung wird also, sofern die Arbeitsmaschine über einen Fahrantrieb verfügt, zu einem Teil dem Fahrantrieb und zu einem anderen Teil dem jeweiligen Arbeitsaggregat zugeführt.

Da der Leistungsbedarf eines Arbeitsaggregats während der landwirtschaftlichen Arbeit, beispielsweise während eines Ernteprozesses, situationsabhängig variiert - in einem Feldbereich mit relativ dichtem Feldbestand benötigt das Arbeitsaggregat mehr Leistung als in einem Feldbereich mit weniger dichtem Feldbestand oder im Vorgewendebereich -, ist es aus Gründen der Kraftstoffeinsparung und Verschleißreduzierung bekannt, die von der Verbrennungskraftmaschine maximal abgebbare Leistung automatisch zu verringern.

So beschreibt die DE 10 2008 020 497 A1 ein Regelungskonzept, bei dem die Verbrennungskraftmaschine abhängig vom tatsächlichen Leistungsbedarf der Arbeitsaggregate über eine Regeleinrichtung automatisch in unterschiedlichen Leistungsstufen betrieben wird, in denen die Verbrennungskraftmaschine jeweils eine andere Leistungskennlinie (Motorkennlinie) hat. Die Leistungskennlinien der Leistungsstufen unterscheiden sich in der Maximalleistung der Verbrennungskraftmaschine, die in den verschiedenen Leistungsstufen üblicherweise bei der gleichen Drehzahl erreicht wird.

Auch die DE 10 2008 036 378 A1 beschreibt eine landwirtschaftliche Arbeitsmaschine und ein Verfahren zum Betrieb einer landwirtschaftlichen Arbeitsmaschine gemäß Oberbegriff der Ansprüche 1 und 10.

Fährt eine Erntemaschine beispielsweise in einen Vorgewendebereich, ermittelt die Regeleinrichtung einen Anstieg der Drehzahl an der Abtriebswelle der Verbrennungskraftmaschine bedingt durch den verringerten Leistungsbedarf des jeweiligen Arbeitsaggregats und schaltet die Verbrennungskraftmaschine daraufhin, gegebenenfalls sogar mehrfach hintereinander, in eine niedrigere Leistungsstufe mit einer geringeren Maximalleistung. Das hat wiederum zur Folge, dass sich die Drehzahl der Abtriebswelle und gegebenenfalls auch das abgegebene Drehmoment verringert. Nach dem Durchfahren des Vorgewendebereichs fährt die Erntemaschine dann, während die Verbrennungskraftmaschine noch in der niedrigen Leistungsstufe betrieben wird, wieder in den zu erntenden Feldbestand, wodurch der Leistungsbedarf des jeweiligen Arbeitsaggregats wieder ansteigt. Dadurch verringert sich die Drehzahl der Abtriebswelle und die Regeleinrichtung bewirkt ein Umschalten der Verbrennungskraftmaschine, gegebenenfalls ebenfalls über mehrere Leistungsstufen hinweg, in eine höhere Leistungsstufe, damit die Verbrennungskraftmaschine wieder eine höhere Leistung zur Verfügung stellen kann.

Problematisch bei dem bekannten Regelungskonzept ist, dass die Verbrennungskraftmaschine von der Regeleinrichtung in einer Leistungsstufe betrieben werden kann, die höher ist als es für den jeweiligen Zweck oder unter den jeweiligen Umgebungsbedingungen erforderlich wäre. So werden abhängig von den Umgebungsparametern, zum Beispiel der Beschaffenheit des Feldbestands oder Untergrunds, und dem einzusetzenden Vorsatzgerät (Aufsammler, Schneidwerk, Maisgebiss, Maispflücker etc.) unterschiedliche Anforderungen an die Motorleistung gestellt. Nicht bei jedem Feldbestand (relativ dichter Feldbestand, weniger dichter Feldbestand etc.) und nicht bei jedem Vorsatzgerät ist derselbe maximale Leistungsbedarf zu erwarten. Wird nun die Verbrennungskraftmaschine in einer zu hohen Leistungsstufe betrieben, führt dies zu einem Anstieg des Kraftstoffverbrauchs und entsprechend der Schadstoffemissionen.

Der Erfindung liegt das Problem zugrunde, die bekannte Arbeitsmaschine dahingehend weiterzubilden, dass Kraftstoffverbrauch und Schadstoffemissionen gesenkt werden können.

Das obige Problem wird gemäß einer ersten Lehre der Erfindung bei einer landwirtschaftlichen Arbeitsmaschine gemäß dem Oberbegriff von Anspruch 1 durch die Merkmale des kennzeichnenden Teils von Anspruch 1 gelöst.

Die landwirtschaftliche Arbeitsmaschine, bei der es sich insbesondere um eine Erntemaschine wie einen Mähdrescher oder Feldhäcksler handelt, weist eine Verbrennungskraftmaschine auf, die in verschiedenen Leistungsstufen betreibbar ist, in denen sie jeweils eine andere Leistungskennlinie hat. Die Leistungsstufen, die infinitesimal klein sein können, unterscheiden sich jeweils im Verlauf der Leistung abhängig von der Drehzahl der Abtriebswelle der Verbrennungskraftmaschine und insbesondere in der von der Verbrennungskraftmaschine abgebbaren Maximalleistung.

Die Leistungsstufen sind verschiedenen vorwählbaren Leistungsstufenbereichen zugeordnet, die sich zumindest in der höchsten, jeweils zugeordneten Leistungsstufe voneinander unterscheiden. Dabei sind mindestens zwei Leistungsstufenbereiche, vorzugsweise mindestens drei Leistungsstufenbereiche, vorgesehen, die jeweils eine oder mehrere Leistungsstufen umfassen.

Beispielsweise sind insgesamt zehn Leistungsstufen vorgesehen, die sich in der von der Verbrennungskraftmaschine abgebbaren Maximalleistung unterscheiden. Sind in diesem Fall drei Leistungsstufenbereiche vorgesehen, ist es denkbar, dass ein erster Leistungsstufenbereich die drei Leistungsstufen mit der geringsten von der Verbrennungskraftmaschine abgebbaren Maximalleistung, das heißt die drei niedrigsten Leistungsstufen, umfasst, ein zweiter Leistungsstufenbereich die sieben Leistungsstufen mit der geringsten von der Verbrennungskraftmaschine abgebbaren Maximalleistung, das heißt die sieben niedrigsten Leistungsstufen, umfasst und ein dritter Leistungsstufenbereich alle Leistungsstufen umfasst.

Ferner ist mindestens ein Arbeitsaggregat vorgesehen, dem von der Verbrennungskraftmaschine abgegebene Leistung zuführbar ist. Bei dem Arbeitsaggregat handelt es sich beispielsweise um ein Vorsatzgerät wie einen Aufsammler ("Pick Up"), ein Schneidwerk, insbesondere Direktschneidwerk ("Direct Disc"), ein Maisgebiss oder einen Maispflücker.

Um die Verbrennungskraftmaschine im Betrieb zu regeln und zwischen den Leistungsstufen umzuschalten, ist ferner eine Regeleinrichtung vorgesehen. Die Regeleinrichtung erlaubt ein automatisiertes Umschalten der Verbrennungskraftmaschine von einer der Leistungsstufen in eine andere der Leistungsstufen, insbesondere in die nächste Leistungsstufe, das heißt in eine Leistungsstufe mit der nächst höheren oder mit der nächst niedrigeren von der Verbrennungskraftmaschine abgebbaren Maximalleistung.

Mit einem "Umschalten" ist im Sinne der Erfindung nicht zwingend ein Schaltvorgang eines Getriebes gemeint, sondern allgemein das Einstellen einer anderen (höheren oder niedrigeren) Leistungsstufe, in der die Verbrennungskraftmaschine betrieben wird. Dies kann beispielsweise durch Änderung der Einspritzmenge oder Veränderung des Kraftstoffgemisches, insbesondere des Verbrennungsluftverhältnis, erfolgen, um nur einige Beispiele zu nennen.

Das Umschalten geschieht automatisch, sobald sich der dem mindestens einen Arbeitsaggregat zugeordnete Leistungsbedarf ändert. Dabei erfolgt das Umschalten erfindungsgemäß nur zwischen Leistungsstufen des jeweils vorgewählten Leistungsstufenbereichs.

Das erfindungsgemäße Regelungskonzept hat den Vorteil, dass die für die Regelung zur Verfügung stehenden Leistungsstufen an einen konkreten Bedarfsfall individuell angepasst werden können, indem zunächst ein Leistungsstufenbereich vorgewählt wird und dann die automatisierte, leistungsbedarfsabhängige Regelung nur unter Nutzung der Leistungsstufen des jeweils vorgewählten Leistungsstufenbereichs durchgeführt wird. Dadurch kann die Verbrennungskraftmaschine von der Regeleinrichtung nur in den Leistungsstufen betrieben werden, die für den jeweiligen Zweck oder unter den jeweiligen Umgebungsbedingungen optimal sind. Beispielsweise kann, wenn ein relativ dichter Feldbestand bearbeitet bzw. geerntet werden soll, ein Leistungsstufenbereich gewählt werden, der Leistungsstufen mit durchschnittlich relativ hoher Maximalleistung oder vorzugsweise sogar alle Leistungsstufen umfasst. Soll dagegen ein weniger dichter Feldbestand bearbeitet werden, kann ein Leistungsstufenbereich gewählt werden, der Leistungsstufen mit durchschnittlich relativ niedriger Maximalleistung umfasst. Entsprechend kann der zu verwendende Leistungsstufenbereich auch an verschiedene Vorsatzgeräte angepasst werden, die sich durch den maximalen Leistungsbedarf unterscheiden. Auf diese Weise lassen sich Kraftstoffverbrauch und Schadstoffemissionen deutlich reduzieren.

Gemäß der Ausgestaltung der landwirtschaftlichen Arbeitsmaschine nach Anspruch 2 erlaubt die Regeleinrichtung, wie zuvor angedeutet, eine Vorwahl eines der Leistungsstufenbereiche, in dem die Verbrennungskraftmaschine zwischen Leistungsstufen umschaltbar ist. Insbesondere erlaubt die Regeleinrichtung eine manuelle Vorwahl, beispielsweise durch den Fahrer. Dieser kann dann vor Beginn des jeweiligen Arbeits- bzw. Erntevorgangs oder wenn er eine Veränderung der Beschaffenheit des zu bearbeitenden Feldbestands feststellt, manuell einen bestimmten Leistungsstufenbereich einstellen, der seiner Erfahrung nach dem zu erwartenden Leistungsbedarf besser angepasst ist.

Dabei ist die Regeleinrichtung insbesondere konfiguriert, ein Umschalten von einem höheren Leistungsstufenbereich in einen niedrigeren Leistungsstufenbereich erst dann zu bewirken, wenn der tatsächliche Leistungsbedarf des mindestens einen Arbeitsaggregats unter einen vorgegebenen Sollwert gefallen ist (Anspruch 3). Ein Vorteil ist, dass dadurch keine ungewollte Leistungsbegrenzung durch Einstellen eines Leistungsstufenbereichs, dessen Leistungsstufen eine zu geringe Maximalleistung für die in diesem Augenblick zu verrichtende Arbeit des Arbeitsaggregats haben, erfolgen kann. Die Leistungsbegrenzung erfolgt erst dann, wenn die geforderte Leistung der Verbrennungskraftmaschine unter die Leistung der höchsten Leistungskennlinie des zuvor gewählten Leistungsstufenbereichs (bei gleicher Drehzahl der Abtriebswelle der Verbrennungskraftmaschine) fällt. Diese Funktion dient als zuverlässiger Schutz vor unachtsamer Leistungsbegrenzung und zur Vermeidung des Risikos, dass ein Teil der Vorrichtung oder ein Arbeitsaggregat verstopft.

Gemäß der Ausgestaltung der landwirtschaftlichen Arbeitsmaschine nach Anspruch 4 weist diese eine Anzeigeeinrichtung auf, die konfiguriert ist, einer Bedienperson (dem Fahrer) den tatsächlichen Leistungsbedarf des mindestens einen Arbeitsaggregats anzuzeigen. Insbesondere ist die Anzeigeeinrichtung auch konfiguriert, der Bedienperson, insbesondere zusammen mit dem tatsächlichen Leistungsbedarf des mindestens einen Arbeitsaggregats, den vorgewählten Leistungsstufenbereich und/oder die Maximalleistung der Leistungsstufe des jeweils vorgewählten Leistungsstufenbereichs, in der die Maximalleistung am höchsten ist, anzuzeigen (Anspruch 5). Auf diese Weise ist der Fahrer immer über den tatsächlichen Leistungsbedarf informiert, wodurch dieser genauer abschätzen kann, ab wann eine Änderung des eingestellten Leistungsstufenbereichs sinnvoll ist.

Das Arbeitsaggregat, das zur Verrichtung oder Unterstützung landwirtschaftlicher Arbeit dient, ist gemäß der Ausgestaltung nach Anspruch 6 gewählt aus der Gruppe umfassend hydraulisch angetriebene Arbeitsaggregate und rotatorisch angetriebene Arbeitsaggregate, wobei das Arbeitsaggregat insbesondere ein Vorsatzgerät der Arbeitsmaschine ist. Ein Beispiel für ein hydraulisch angetriebenes Arbeitsaggregat ist das Fronthubwerk eines Feldhäckslers oder Mähdreschers, das auch das Vorsatzgerät, beispielsweise Schneidwerk, trägt. Ein Beispiel für ein rotatorisch angetriebenes Arbeitsaggregat ist das Schneidwerk oder die Fördereinrichtung, mit der das Schnittgut zum Dreschwerk gefördert wird. Auch die Dreschtrommel des Dreschwerks ist ein rotatorisch angetriebenes Arbeitsaggregat.

Die Regeleinrichtung kann erfindungsgemäß ferner konfiguriert sein, ein automatisiertes Umschalten der Verbrennungskraftmaschine zwischen Leistungsstufen, insbesondere zwischen Leistungsstufen des jeweils vorgewählten Leistungsstufenbereichs, dann zu bewirken, wenn die Verbrennungskraftmaschine in einem vorgegebenen Drehzahlbereich betrieben wird (Anspruch 7). Insbesondere liegt der Drehzahlbereich oberhalb 1700 1/min, bevorzugt oberhalb 1750 1/min, besonders bevorzugt oberhalb 1800 1/min, und/oder unterhalb 2000 1/min, bevorzugt unterhalb 1950 1/min, besonders bevorzugt unterhalb 1900 1/min. In diesen Drehzahlbereichen ist die von der Verbrennungskraftmaschine zur Verfügung gestellte Leistung am höchsten und ist auch relativ konstant über den Drehzahlbereich.

Dabei kann die Regeleinrichtung gemäß der Ausgestaltung nach Anspruch 8 auch eine Vorwahl, insbesondere manuelle Vorwahl, eines Drehzahlbereichs erlauben, in dem die Verbrennungskraftmaschine zwischen Leistungsstufen, insbesondere zwischen Leistungsstufen des jeweils vorgewählten Leistungsstufenbereichs, umschaltbar ist. Dies ermöglicht dem Fahrer, die Schaltgrenzen, an denen zwischen Leistungsstufen umgeschaltet wird, in einen anderen, zum Beispiel niedrigeren Bereich zu verschieben, wobei die Breite des Drehzahlbereichs, die beispielsweise 100 1/min beträgt, vorzugsweise beibehalten wird. Auf diese Weise lassen sich Kraftstoffverbrauch und Schadstoffemissionen weiter senken.

Die landwirtschaftliche Arbeitsmaschine kann erfindungsgemäß mit einem eigenen Fahrantrieb, der eine Antriebsachse und/oder Antriebsräder umfassen kann, versehen sein, dem von der Verbrennungskraftmaschine abgegebene Leistung zuführbar ist (Anspruch 9). Die Arbeitsmaschine kann aber alternativ auch als Fahrzeug ohne eigenen Antrieb, beispielsweise als Hänger, ausgebildet sein. Im Falle des Vorhandenseins eines Fahrantriebs ist die Verbrennungskraftmaschine insbesondere so regelbar, dass beim Umschalten der Verbrennungskraftmaschine von einer der Leistungsstufen in eine andere der Leistungsstufen die Drehzahl des Fahrantriebs und damit die Fahrgeschwindigkeit im Wesentlichen konstant bleibt. "Im Wesentlichen" meint, dass die Drehzahl des Fahrantriebs und somit die Fahrgeschwindigkeit aufgrund der Beschaffenheit des Geländes (Steigung, Gefälle, rutschiger Untergrund etc.) geringfügig variieren kann, bei Annahme einer konstanten Beschaffenheit des Geländes aber konstant gehalten werden kann.

Nach einer weiteren Lehre gemäß Anspruch 10, der eigenständige Bedeutung zukommt, wird ein Verfahren zum Betrieb einer landwirtschaftlichen Arbeitsmaschine, insbesondere einer wie zuvor definierten landwirtschaftlichen Arbeitsmaschine, beansprucht, bei dem eine Verbrennungskraftmaschine, die in verschiedenen Leistungsstufen betreibbar ist, in denen sie jeweils eine andere Leistungskennlinie hat, automatisch von einer der Leistungsstufen in eine andere der Leistungsstufen umschaltbar ist, sobald sich der mindestens einem Arbeitsaggregat zugeordnete Leistungsbedarf ändert. Erfindungsgemäß ist dabei vorgesehen, dass die Leistungsstufen verschiedenen Leistungsstufenbereichen zugeordnet sind, die sich in der durchschnittlichen Höhe der von der Verbrennungskraftmaschine abgebbaren Maximalleistung unterscheiden, und dass die Verbrennungskraftmaschine nur zwischen Leistungsstufen eines Leistungsstufenbereichs umgeschaltet wird.

Im Folgenden wird die Erfindung anhand einer lediglich ein Ausführungsbeispiel darstellenden Zeichnung näher erläutert. In der Zeichnung zeigt
- Fig. 1: eine landwirtschaftliche Arbeitsmaschine gemäß der vorliegenden Erfindung während des Durchfahrens eines Feldbestands,
- Fig. 2a: ein Kennlinien-Diagramm einer Arbeitsmaschine gemäß Fig. 1, wenn die Verbrennungskraftmaschine in der höchsten Leistungsstufe eines ersten Leistungsstufenbereichs betrieben wird,
- Fig. 2b: dem Fahrer in einem Display angezeigte Informationen während des Betriebs der Verbrennungskraftmaschine in der höchsten Leistungsstufe des ersten Leistungsstufenbereichs,
- Fig. 3a: ein Kennlinien-Diagramm einer Arbeitsmaschine gemäß Fig. 1, wenn die Verbrennungskraftmaschine in einer mittleren Leistungsstufe eines zweiten Leistungsstufenbereichs betrieben wird,
- Fig. 3b: dem Fahrer in einem Display angezeigte Informationen während des Betriebs der Verbrennungskraftmaschine in der mittleren Leistungsstufe des zweiten Leistungsstufenbereichs,
- Fig. 4a: ein Kennlinien-Diagramm einer Arbeitsmaschine gemäß Fig. 1, wenn die Verbrennungskraftmaschine in der zweithöchsten Leistungsstufe eines dritten Leistungsstufenbereichs betrieben wird,
- Fig. 4b: dem Fahrer in einem Display angezeigte Informationen während des Betriebs der Verbrennungskraftmaschine in der zweithöchsten Leistungsstufe des dritten Leistungsstufenbereichs,
- Fig. 5a: ein Kennlinien-Diagramm einer Arbeitsmaschine gemäß Fig. 1 mit hervorgehobenem Drehzahlbereich und
- Fig. 5b: dem Fahrer in einem Display angezeigte Informationen zu der aktuell eingestellten Obergrenze des Drehzahlbereichs.

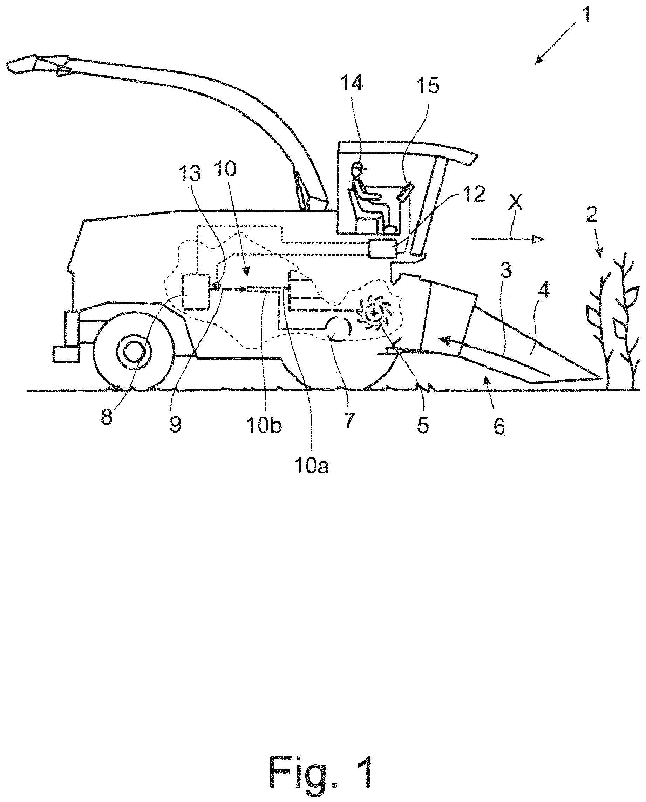

In Fig. 1 ist eine erfindungsgemäße landwirtschaftliche Arbeitsmaschine 1 in Form eines Feldhäckslers dargestellt. Die Arbeitsmaschine 1 wird in eine Fahrtrichtung X durch einen Feldbestand 2, beispielsweise ein Maisfeld, gefahren. Ein Gutfluss 3 aus Pflanzenteilen wird während des Betriebs durch einen Einzugskanal 4 eingezogen und zum Zwecke der weiteren Zerkleinerung zu einem Arbeitsaggregat 5 in Form einer Häckslertrommel geführt. Der Einzugskanal 4 ist Bestandteil eines Vorsatzgerätes 6, das auch ein Schneidwerk (nicht dargestellt) aufweist.

Die Arbeitsmaschine 1 ist hier beispielhaft als selbstfahrende Erntemaschine ausgebildet und weist einen Fahrantrieb 7 mit einer Antriebsachse für Antriebsräder (nicht dargestellt) auf.

Eine Verbrennungskraftmaschine 8 dient zum Antrieb des dargestellten und weiterer (nicht dargestellter) Arbeitsaggregate 5 sowie des Fahrantriebs 7. Dabei überträgt die Verbrennungskraftmaschine 8 zur Verfügung stehende Leistung über ihre Abtriebswelle 9 an einen Antriebsstrang 10, der sich in einen zu den Arbeitsaggregaten 5 führenden, ersten Antriebsteilstrang 10a und einen zum Fahrantrieb 7 führenden zweiten Antriebsteilstrang 10b teilt.

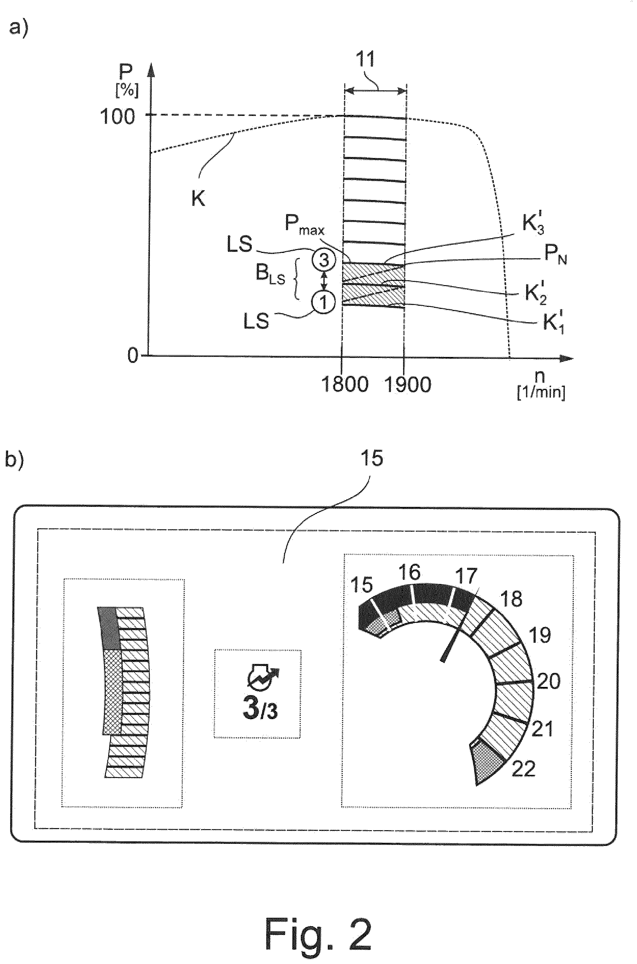

Die Verbrennungskraftmaschine 8 ist in verschiedenen Leistungsstufen LS, hier beispielhaft zehn Leistungsstufen LS, betreibbar, die in Fig. 2a, 3a und 4a durch entsprechende Zahlen in einem Kreis symbolisiert sind. In jeder Leistungsstufe LS hat die Verbrennungskraftmaschine 8 eine andere Leistungskennlinie (Motorkennlinie) K. Die Leistungskennlinien K definieren den (absoluten) Verlauf der Leistung P (in kW) relativ zur Drehzahl n (in 1/min) für die jeweilige Leistungsstufe LS, wobei sich die Leistungskennlinien K der Leistungsstufen LS in der Höhe der Leistung P, die die Verbrennungskraftmaschine 8 abhängig von der Drehzahl n an der Abtriebswelle 9 abgibt, unterscheiden. Aus Gründen der Übersichtlichkeit ist in Fig. 2a, 3a und 4a nur die Leistungskennlinie K der höchsten Leistungsstufe LS der Verbrennungskraftmaschine 8 dargestellt, das heißt der Leistungsstufe LS, in der die über die Abtriebswelle 9 abgebbare Leistung P insgesamt am höchsten ist.

Ferner ist in Fig. 2a, 3a und 4a zu jeder verfügbaren Leistungsstufe LS eine weitere Kennlinie K'₁, K'₂, K'₃ ... K'₁₀ dargestellt, die hier den prozentualen Verlauf der Leistung P (in %) relativ zur Drehzahl n (in 1/min) definiert. Dabei entspricht die Maximalleistung Pₘₐₓ einer Leistung von 100 %, die im Maximum der jeweiligen Kennlinie liegt.

In Fig. 2a, 3a und 4a ist schließlich noch ein vorgegebener Drehzahlbereich 11 dargestellt, der sich durch eine relativ konstante Leistung P auszeichnet. In diesem Drehzahlbereich 11 liegt auch die Drehzahl, bei der die Maximalleistung Pₘₐₓ zur Verfügung steht. Die Obergrenze des Drehzahlbereichs 11 ist durch die Nennleistung P_{N} definiert, die hier beispielhaft bei 1900 1/min liegt. Die Untergrenze ist hier beispielhaft um 100 1/min geringer und liegt bei 1800 1/min.

In diesem Drehzahlbereich 11 wird die Verbrennungskraftmaschine 8 abhängig vom tatsächlichen Leistungsbedarf der Arbeitsaggregate 5 zwischen verschiedenen Leistungsstufen LS umgeschaltet. Zur Regelung der Verbrennungskraftmaschine 8 und insbesondere zum Umschalten zwischen den Leistungsstufen LS ist eine Regeleinrichtung 12 vorgesehen. Die Regeleinrichtung 12 schaltet die Verbrennungskraftmaschine 8 dabei grundsätzlich derart um, dass die Fahrgeschwindigkeit bzw. Drehzahl des Fahrantriebs 7 konstant bleibt. Sobald im Betrieb der Arbeitsmaschine 1 aufgrund einer Änderung des Leistungsbedarfs der Arbeitsaggregate 5 die Drehzahl n der Abtriebswelle 9 der Verbrennungskraftmaschine 8 den vorgegebenen Drehzahlbereich 11 zu verlassen droht oder verlässt, erfolgt automatisch ein Umschalten in die jeweils nächste Leistungsstufe LS. Steigt nun in einer der Leistungsstufen LS die Drehzahl n aufgrund eines reduzierten Leistungsbedarfs über 1900 1/min, wird automatisch in die nächst niedrigere Leistungsstufe LS umgeschaltet, in der die Leistung P beispielsweise 10 % niedriger und die Drehzahl n 100 1/min niedriger ist. Sinkt dagegen in einer der Leistungsstufen LS aufgrund eines erhöhten Leistungsbedarfs die Drehzahl n unter 1800 1/min, wird automatisch in die nächst höhere Leistungsstufe LS umgeschaltet, in der entsprechend die Leistung P 10 % höher und die Drehzahl n 100 1/min höher ist. Die jeweilige Drehzahl n der Abtriebswelle 9 wird dabei kontinuierlich von einem Drehzahlsensor 13 ermittelt und dem Fahrer 14 über ein Display 15 angezeigt.

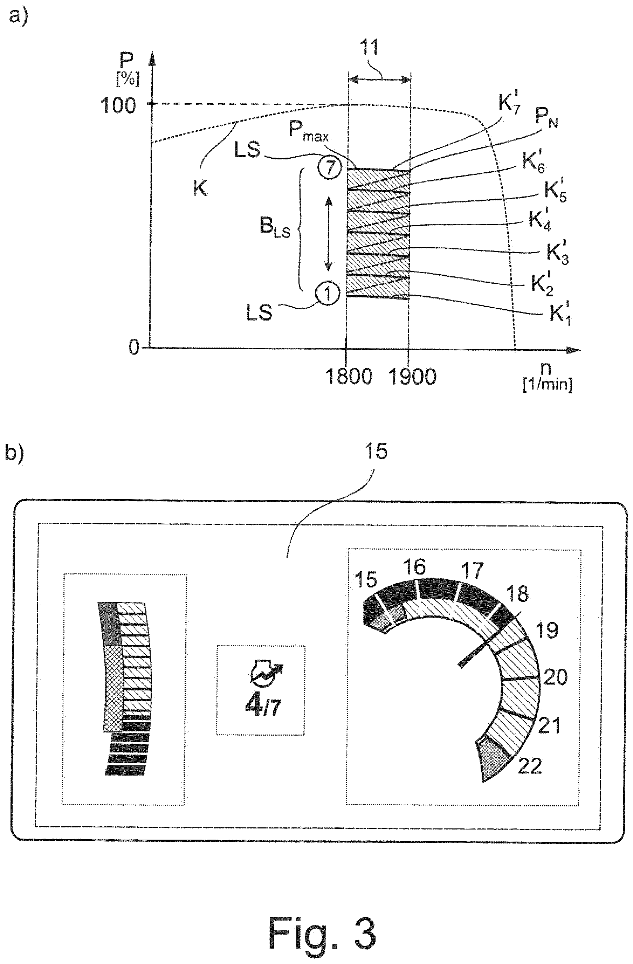

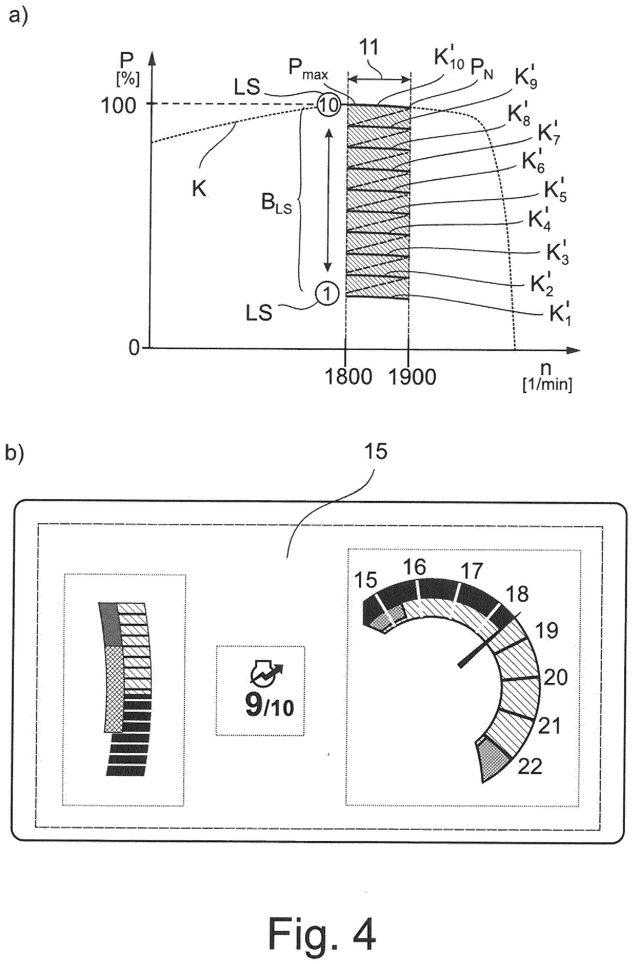

Erfindungsgemäß sind, was bei Vergleich der Figuren 2a, 3a und 4a deutlich wird, die Leistungsstufen LS verschiedenen Leistungsstufenbereichen B_{LS} zugeordnet, die sich zumindest in der höchsten, jeweils zugeordneten Leistungsstufe voneinander unterscheiden. Ein erster Leistungsstufenbereich B_{LS}, der die drei niedrigsten Leistungsstufen LS umfasst, ist in Fig. 2a dargestellt. Ein zweiter Leistungsstufenbereich B_{LS}, der die sieben niedrigsten Leistungsstufen LS umfasst, ist in Fig. 3a dargestellt. Ein dritter Leistungsstufenbereich B_{LS}, der alle zehn Leistungsstufen LS umfasst, ist in Fig. 4a dargestellt.

Die Regeleinrichtung 12 ist nun erfindungsgemäß so konfiguriert, dass ein Umschalten der Verbrennungskraftmaschine 8 nur zwischen Leistungsstufen LS innerhalb des jeweils vorgewählten Leistungsstufenbereichs B_{LS} möglich ist. Dazu wählt beispielsweise der Fahrer 14 vor oder während einer Bearbeitung des Feldbestands 2 einen bestimmten der Leistungsstufenbereiche B_{LS} vor, der seiner Ansicht nach dem verwendeten Vorsatzgerät 6 und der Beschaffenheit des Feldbestands 2 optimal angepasst ist. In diesem vorgewählten Leistungsstufenbereich B_{LS} erfolgt dann das zuvor beschriebene automatische Umschalten zwischen den Leistungsstufen LS. Dabei ist aus Sicherheitsgründen in dem hier beschriebenen Ausführungsbeispiel einer landwirtschaftlichen Arbeitsmaschine 1 vorgesehen, dass bei einer manuellen Vorwahl durch den Fahrer 14 ein Umschalten von einem höheren Leistungsstufenbereich B_{LS} in einen niedrigeren Leistungsstufenbereich B_{LS} erst dann erfolgt, wenn der tatsächliche Leistungsbedarf des mindestens einen Arbeitsaggregats 5 unter einen vorgegebenen Sollwert gefallen ist.

Damit der Fahrer 14 eine Kontrollmöglichkeit während der Bearbeitung des Feldbestands 2 und eine Entscheidungshilfe zur Vorwahl des Leistungsstufenbereich B_{LS} hat, wird in dem Display 15 neben der Drehzahl n (Fig. 2b, 3b, 4b, jeweils rechts) auch die aktuelle Leistungsstufe LS und die höchste in dem jeweils vorgewählten Leistungsstufenbereich B_{LS} zur Verfügung stehende Leistungsstufe LS angezeigt (Fig. 2b, 3b, 4b, jeweils in der Mitte). Ferner wird auch die Auslastung der Verbrennungskraftmaschine 8 angezeigt (Fig. 2b, 3b, 4b, jeweils links).

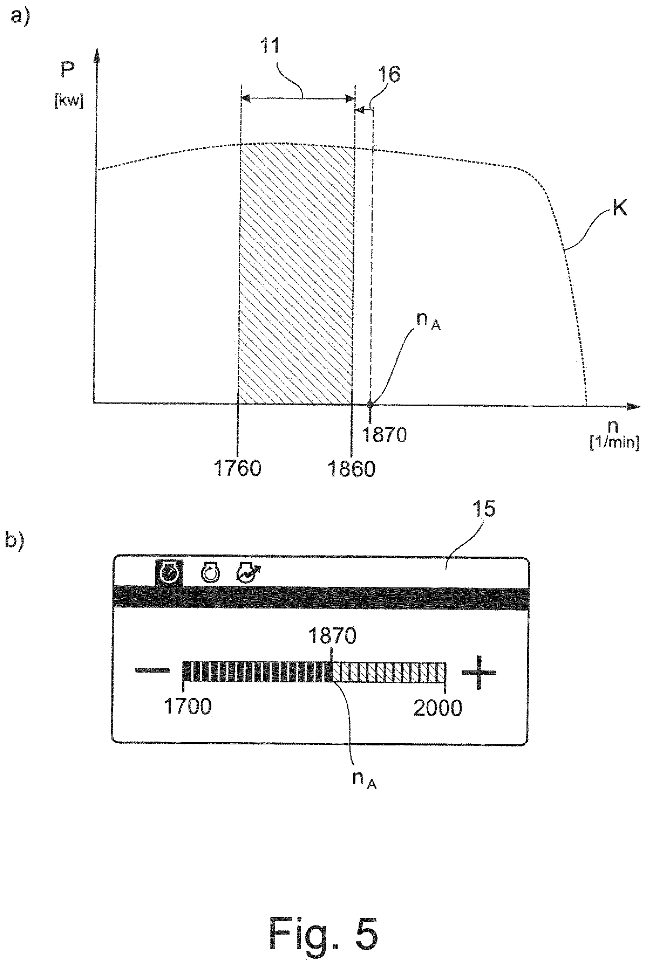

In Fig. 5a ist ebenfalls eine Leistungskennlinie K einer Verbrennungskraftmaschine 8 und ein definierter Drehzahlbereich 11 dargestellt. Hier liegt die Obergrenze bei 1860 1/min und die Untergrenze bei 1760 1/min. Mit einer vertikalen gestrichelten Linie ist die aktuell eingestellte Arbeitsdrehzahl n_{A} gekennzeichnet, also die tatsächliche Drehzahlvorgabe der Abtriebswelle 9 für die durchzuführende landwirtschaftliche Bearbeitung. Diese ist hier, insbesondere manuell (vom Fahrer), von beispielsweise 1910 1/min ("Vollgasbetrieb") auf 1870 1/min verringert worden. Ein Grund, weshalb der Fahrer die Arbeitsdrehzahl n_{A} verringern möchte, ist beispielsweise, dass der erwartete Leistungsbedarf der Arbeitsaggregate 5 bei der durchzuführenden landwirtschaftlichen Bearbeitung geringer als zuvor ist und durch eine Verringerung der Arbeitsdrehzahl n_{A} der Kraftstoffverbrauch und die Schadstoffemissionen reduziert werden können.

Wären nun die Schaltgrenzen, an denen zwischen Leistungsstufen LS umgeschaltet wird, fest vorgegeben, beispielsweise wie in den Figuren 2a, 3a und 4a die Obergrenze bei 1900 1/min und die Untergrenze bei 1800 1/min, könnte das beschriebene automatisierte Umschalten der Verbrennungskraftmaschine 8 von einer der Leistungsstufen LS in eine andere der Leistungsstufen LS im Wesentlichen nur im Vollgasbetrieb bewirkt werden, nicht aber bei beliebigen kleineren Arbeitsdrehzahlen n_{A}, insbesondere nicht im Halbgasbetrieb. Um das automatisierte Umschalten aber bei beliebigen Arbeitsdrehzahlen n_{A} zu ermöglichen, ist optional vorgesehen, dass sich mit der Arbeitsdrehzahl n_{A} die Schaltgrenzen automatisch verschieben, wobei die Breite des Drehzahlbereichs 11, die beispielsweise 100 1/min beträgt, vorzugsweise beibehalten wird.

Dabei kann ein Offset 16 zu dem innerhalb der Schaltgrenzen liegenden Drehzahlbereich 11 vorgesehen sein, der hier beispielhaft 10 1/min beträgt. Bei einer Arbeitsdrehzahl n_{A} von 1870 1/min verschiebt sich die Obergrenze des Drehzahlbereichs automatisch auf 1860 1/min und die Untergrenze auf 1760 1/min.

Gemäß Fig. 5b lässt sich über das Display 15 die aktuell eingestellte Arbeitsdrehzahl n_{A} anzeigen, bzw. direkt manuell verschieben, insofern es sich beispielsweise um ein Touch Panel handelt. Der Drehzahlbereich 11 bzw. dessen Schaltgrenzen verschieben sich dadurch automatisch mit.

### Bezugszeichen

- 1: landwirtschaftliche Arbeitsmaschine
- 2: Feldbestand
- 3: Gutfluss
- 4: Einzugskanal
- 5: Arbeitsaggregate
- 6: Vorsatzgerät
- 7: Fahrantrieb
- 8: Verbrennungskraftmaschine
- 9: Abtriebswelle
- 10: Antriebsstrang
- 10a: erster Antriebsteilstrang
- 10b: zweiter Antriebsteilstrang
- 11: Drehzahlbereich
- 12: Regeleinrichtung
- 13: Drehzahlsensor
- 14: Fahrer, Bedienperson
- 15: Display
- 16: Offset
- X: Fahrtrichtung
- P: Leistung
- Pₘₐₓ: Maximalleistung
- P_{N}: Nennleistung
- n: Drehzahl
- n_{A}: Arbeitsdrehzahl
- LS: Leistungsstufen
- B_{LS}: Leistungsstufenbereiche
- K: Leistungskennlinie (absolute Leistung)
- K'₁...K'₁₀: Leistungskennlinien (prozentuale Leistung)

## Patentansprüche

1. Landwirtschaftliche Arbeitsmaschine, insbesondere Erntemaschine, wobei eine Verbrennungskraftmaschine (8) vorgesehen ist, die in verschiedenen Leistungsstufen (LS) betreibbar ist, in denen sie jeweils eine andere Leistungskennlinie (K) hat, wobei mindestens ein Arbeitsaggregat (5) vorgesehen ist, dem von der Verbrennungskraftmaschine (8) abgegebene Leistung (P) zuführbar ist, und wobei eine Regeleinrichtung (12) vorgesehen ist, die konfiguriert ist, ein automatisiertes Umschalten der Verbrennungskraftmaschine (8) von einer der Leistungsstufen (LS) in eine andere der Leistungsstufen (LS) zu bewirken, sobald sich der dem mindestens einen Arbeitsaggregat (5) zugeordnete Leistungsbedarf ändert,
**dadurch gekennzeichnet,**
**dass** die Leistungsstufen (LS) verschiedenen, vorwählbaren Leistungsstufenbereichen (B_{LS}) zugeordnet sind, die sich zumindest in der höchsten, jeweils zugeordneten Leistungsstufe (LS) voneinander unterscheiden, und dass die Regeleinrichtung (12) konfiguriert ist, ein Umschalten der Verbrennungskraftmaschine (8) nur zwischen Leistungsstufen (LS) des jeweils vorgewählten Leistungsstufenbereichs (B_{LS}) zu bewirken.

2. Landwirtschaftliche Arbeitsmaschine nach Anspruch 1, **dadurch gekennzeichnet, dass** die Regeleinrichtung (12) eine manuelle Vorwahl eines der Leistungsstufenbereiche (B_{LS}) erlaubt.

3. Landwirtschaftliche Arbeitsmaschine nach Anspruch 2, **dadurch gekennzeichnet, dass** die Regeleinrichtung (12) konfiguriert ist, ein Umschalten von einem höheren Leistungsstufenbereich (B_{LS}) in einen niedrigeren Leistungsstufenbereich (B_{LS}) erst dann zu bewirken, wenn der tatsächliche Leistungsbedarf des mindestens einen Arbeitsaggregats (5) unter einen vorgegebenen Sollwert gefallen ist.

4. Landwirtschaftliche Arbeitsmaschine nach einem der vorhergehenden Ansprüche, **dadurch gekennzeichnet, dass** sie eine Anzeigeeinrichtung (15) aufweist, die konfiguriert ist, einer Bedienperson (14) den tatsächlichen Leistungsbedarf des mindestens einen Arbeitsaggregats (5) anzuzeigen.

5. Landwirtschaftliche Arbeitsmaschine nach Anspruch 4, **dadurch gekennzeichnet, dass** die Anzeigeeinrichtung (15) konfiguriert ist, der Bedienperson (14), insbesondere zusammen mit dem tatsächlichen Leistungsbedarf des mindestens einen Arbeitsaggregats (5), den vorgewählten Leistungsstufenbereich (B_{LS}) und/oder die Maximalleistung (Pₘₐₓ) der Leistungsstufe (LS) des vorgewählten Leistungsstufenbereichs (B_{LS}), in der die Maximalleistung (Pₘₐₓ) am höchsten ist, anzuzeigen.

6. Landwirtschaftliche Arbeitsmaschine nach einem der vorhergehenden Ansprüche, **dadurch gekennzeichnet, dass** das Arbeitsaggregat (5) gewählt ist aus der Gruppe umfassend hydraulisch angetriebene Arbeitsaggregate (5) und rotatorisch angetriebene Arbeitsaggregate (5), wobei das Arbeitsaggregat (5) insbesondere ein Vorsatzgerät (6), beispielsweise Schneidwerk, der Arbeitsmaschine (1) ist.

7. Landwirtschaftliche Arbeitsmaschine nach einem der vorhergehenden Ansprüche, **dadurch gekennzeichnet, dass** die Regeleinrichtung (12) konfiguriert ist, ein automatisiertes Umschalten der Verbrennungskraftmaschine (8) zwischen Leistungsstufen (LS), insbesondere zwischen Leistungsstufen (LS) des vorgewählten Leistungsstufenbereichs (B_{LS}), dann zu bewirken, wenn die Verbrennungskraftmaschine (8) in einem vorgegebenen Drehzahlbereich (11) betrieben wird.

8. Landwirtschaftliche Arbeitsmaschine nach Anspruch 7, **dadurch gekennzeichnet, dass** die Regeleinrichtung (12) eine Vorwahl, insbesondere manuelle Vorwahl, eines Drehzahlbereichs (11) erlaubt, in dem die Verbrennungskraftmaschine (8) zwischen Leistungsstufen (LS), insbesondere zwischen Leistungsstufen (LS) des vorgewählten Leistungsstufenbereichs (B_{LS}), umschaltbar ist.

9. Landwirtschaftliche Arbeitsmaschine nach einem der vorhergehenden Ansprüche, **dadurch gekennzeichnet, dass** sie einen Fahrantrieb (7) aufweist, dem von der Verbrennungskraftmaschine (8) abgegebene Leistung (P) zuführbar ist, wobei die Verbrennungskraftmaschine (8) so regelbar ist, dass beim Umschalten der Verbrennungskraftmaschine (8) von einer der Leistungsstufen (LS) in eine andere der Leistungsstufen (LS) die Drehzahl des Fahrantriebs (7) im Wesentlichen konstant bleibt.

10. Verfahren zum Betrieb einer landwirtschaftlichen Arbeitsmaschine, insbesondere einer landwirtschaftlichen Arbeitsmaschine (1) nach einem der vorhergehenden Ansprüche, bei dem eine Verbrennungskraftmaschine (8), die in verschiedenen Leistungsstufen (LS) betreibbar ist, in denen sie jeweils eine andere Leistungskennlinie (K) hat, automatisch von einer der Leistungsstufen (LS) in eine andere der Leistungsstufen (LS) umschaltbar ist, sobald sich der mindestens einem Arbeitsaggregat (5) zugeordnete Leistungsbedarf ändert,
**dadurch gekennzeichnet,**
**dass** die Leistungsstufen (LS) verschiedenen, vorwählbaren Leistungsstufenbereichen (B_{LS}) zugeordnet sind, die sich zumindest in der höchsten, jeweils zugeordneten Leistungsstufe (LS) voneinander unterscheiden, und dass die Verbrennungskraftmaschine (8) nur zwischen Leistungsstufen (LS) des vorgewählten Leistungsstufenbereichs (B_{LS}) umgeschaltet wird.

## Claims

1. Agricultural working machine, in particular harvesting machine, wherein an internal combustion engine (8) is provided which can be operated at various power levels (LS) at which it respectively has a different power characteristic curve (K) wherein at least one working assembly (5) is provided to which power (P) which is output by the internal combustion engine (8) can be fed, and wherein a regulating device (12) is provided which is configured to bring about automated switching over of the internal combustion engine (8) from one of the power levels (LS) into another of the power levels (LS) as soon as the power demand which is assigned to the at least one working assembly (5) changes,
**characterized**
**in that** the power levels (LS) are assigned to various, preselectable power level ranges (B_{LS}) which differ from one another in respect of the highest respectively assigned power level (LS), and in that the regulating device (12) is configured to bring about switching over of the internal combustion engine (8) only between power levels (LS) of the respectively preselected power level range (B_{LS}) -

2. Agricultural working machine according to Claim 1, **characterized in that** the regulating device (12) permits a manual preselection of one of the power level ranges (B_{LS}) .

3. Agricultural working machine according to Claim 2, **characterized in that** the regulating device (12) is configured not to bring about switching over from a relatively high power level range (B_{LS}) into a relatively low power level range (B_{LS}) until the actual power demand of the at least one working assembly (5) has dropped below a predefined setpoint value.

4. Agricultural working machine according to one of the preceding claims, **characterized in that** said machine has a display device (15) which is configured to display the actual power demand of the at least one working assembly (5) to an operator (14).

5. Agricultural working machine according to Claim 4, **characterized in that** the display device (15) is configured to display to the operator (14), in particular together with the actual power demand of the at least one working assembly (5), the preselected power level range (B_{LS}) and/or the maximum power (Pₘₐₓ) of the power level (LS) of the preselected power level range (B_{LS}) at which the maximum power (Pₘₐₓ) is at its highest.

6. Agricultural working machine according to one of the preceding claims, **characterized in that** the working assembly (5) is selected from the group comprising hydraulically driven working assemblies (5) and rotationally driven working assemblies (5), wherein the working assembly (5) is, in particular, an attachment unit (6), for example a cutting mechanism, of the working machine (1).

7. Agricultural working machine according to one of the preceding claims, **characterized in that** the regulating device (12) is configured to bring about automated switching over of the internal combustion engine (8) between power levels (LS), in particular between power levels (LS) of the preselected power level range (B_{LS}), when the internal combustion engine (8) is operated in a predefined rotational speed range (11) .

8. Agricultural working machine according to Claim 7, **characterized in that** the regulating device (12) permits a preselection, in particular a manual preselection, of a rotational speed range (11) in which the internal combustion engine (8) can be switched over between power levels (LS), in particular between power levels (LS) of the preselected power level range (B_{LS}).

9. Agricultural working machine according to one of the preceding claims, **characterized in that** said machine has a propulsion drive (7), to which power (P) which is output by the internal combustion engine (8) can be fed, wherein the internal combustion engine (8) can be regulated in such a way that when the internal combustion engine (8) is switched over from one of the power levels (LS) into another of the power levels (LS), the rotational speed of the propulsion drive (7) remains essentially constant.

10. Method for operating an agricultural working machine, in particular an agricultural working machine (1) according to one of the preceding claims, in which an internal combustion engine (8) which can be operated at various power levels (LS) at which it respectively has a different power characteristic curve (K) can be switched over automatically from one of the power levels (LS) into another of the power levels (LS) as soon as the power demand which is assigned at least to one working assembly (5) changes,
**characterized**
**in that** the power levels (LS) are assigned to various preselectable power level ranges (B_{LS}) which differ from one another at least in respect of the highest respectively assigned power level (LS), and in that the internal combustion engine (8) can be switched over only between power levels (LS) of the preselected power level range (B_{LS}).

## Revendications

1. Machine de travail agricole, en particulier machine de récolte, un moteur à combustion interne (8) étant prévu, lequel peut fonctionner à différents niveaux de puissance (LS) dans lesquels il a respectivement une autre courbe caractéristique de puissance (K), au moins un groupe de travail (5) étant prévu, lequel peut être alimenté en puissance (P) fournie par le moteur à combustion interne (8), et un dispositif de régulation (12) étant prévu, lequel est configuré pour provoquer une commutation automatisée du moteur à combustion interne (8) de l'un des niveaux de puissance (LS) à un autre niveau de puissance (LS) dès que les besoins en puissance associés audit au moins un groupe de travail (5) changent,
**caractérisée en ce que**
les niveaux de puissance (LS) sont associés à différentes plages de niveaux de puissance (B_{LS}) pouvant être présélectionnées, lesquelles diffèrent au moins de par le niveau de puissance (LS) le plus élevé respectivement associé, et **en ce que** le dispositif de régulation (12) est configuré pour ne provoquer une commutation du moteur à combustion interne (8) qu'entre des niveaux de puissance (LS) de la plage de niveaux de puissance (B_{LS}) respectivement présélectionnée.

2. Machine de travail agricole selon la revendication 1, **caractérisée en ce que** le dispositif de régulation (12) permet une présélection manuelle de l'une des plages de niveaux de puissance (B_{LS}) .

3. Machine de travail agricole selon la revendication 2, **caractérisée en ce que** le dispositif de régulation (12) est configuré pour ne provoquer une commutation d'une plage de niveaux de puissance (B_{LS}) plus élevée à une plage de niveaux de puissance (B_{LS}) plus basse que lorsque les besoins en puissance effectifs dudit au moins un groupe de travail (5) sont tombés au-dessous d'une valeur de consigne prédéfinie.

4. Machine de travail agricole selon l'une quelconque des revendications précédentes, **caractérisée en ce qu'**elle comprend un dispositif d'affichage (15) qui est configuré pour présenter à un opérateur (14) les besoins en puissance effectifs dudit au moins un groupe de travail (5).

5. Machine de travail agricole selon la revendication 4, **caractérisée en ce que** le dispositif d'affichage (15) est configuré pour présenter à l'opérateur (14), en particulier conjointement avec les besoins en puissance effectifs dudit au moins un groupe de travail (5), la plage de niveaux de puissance (B_{LS}) présélectionnée et/ou la puissance maximale (Pₘₐₓ) du niveau de puissance (LS) de la plage de niveaux de puissance (B_{LS}) présélectionnée dans laquelle la puissance maximale (Pₘₐₓ) est la plus élevée.

6. Machine de travail agricole selon l'une quelconque des revendications précédentes, **caractérisée en ce que** le groupe de travail (5) est sélectionné dans le groupe comportant des groupes de travail (5) entraînés de manière hydraulique et des groupes de travail (5) entraînés de manière rotative, le groupe de travail (5) étant en particulier un outil adaptable (6), par exemple un mécanisme de coupe, de la machine de travail (1).

7. Machine de travail agricole selon l'une quelconque des revendications précédentes, **caractérisée en ce que** le dispositif de régulation (12) est configuré pour ne provoquer une commutation automatisée du moteur à combustion interne (8) entre des niveaux de puissance (LS), en particulier entre des niveaux de puissance (LS) de la plage de niveaux de puissance (B_{LS}) présélectionnée, que lorsque le moteur à combustion interne (8) fonctionne dans une plage de régimes (11) prédéfinie.

8. Machine de travail agricole selon la revendication 7, **caractérisée en ce que** le dispositif de régulation (12) permet une présélection, en particulier une présélection manuelle, d'une plage de régimes (11) dans laquelle le moteur à combustion interne (8) peut être commuté entre des niveaux de puissance (LS), en particulier entre des niveaux de puissance (LS) de la plage de niveaux de puissance (B_{LS}) présélectionnée.

9. Machine de travail agricole selon l'une quelconque des revendications précédentes, **caractérisée en ce qu'**elle comprend un système d'entraînement (7) qui peut être alimenté en puissance (P) fournie par le moteur à combustion interne (8), le moteur à combustion interne (8) pouvant être régulé de telle sorte que, lors de la commutation du moteur à combustion interne (8) de l'un des niveaux de puissance (LS) à un autre niveau de puissance (LS), le régime du système d'entraînement (7) demeure sensiblement constant.

10. Procédé de fonctionnement d'une machine de travail agricole, en particulier d'une machine de travail agricole (1) selon l'une quelconque des revendications précédentes, procédé selon lequel un moteur à combustion interne (8) qui peut fonctionner à différents niveaux de puissance (LS) dans lesquels il a respectivement une autre courbe caractéristique de puissance (K) peut être commuté automatiquement de l'un des niveaux de puissance (LS) à un autre niveau de puissance (LS) dès que les besoins en puissance associés audit au moins un groupe de travail (5) changent,
**caractérisé en ce que**
les niveaux de puissance (LS) sont associés à différentes plages de niveaux de puissance (B_{LS}) pouvant être présélectionnées, lesquelles diffèrent au moins de par le niveau de puissance (LS) le plus élevé respectivement associé, et **en ce que** le moteur à combustion interne (8) n'est commuté qu'entre des niveaux de puissance (LS) de la plage de niveaux de puissance (B_{LS}) présélectionnée.
